# EUROPEAN PATENT SPECIFICATION

(11) **EP 4 155 736 B1**
(45) Date of publication and mention of the grant of the patent: **29.01.2025**
(21) Application number: 22188202.0
(22) Date of filing: 02.08.2022
(51) Int. Cl.: G01N 35/00, G01N 35/10

(54) **ADAPTIVE LIGHT BARRIER PROCESSING**
ADAPTIVE LICHTSCHRANKENVERARBEITUNG
TRAITEMENT ADAPTATIF DE BARRIÈRE LUMINEUSE

(30) Priority: 24.09.2021 GB 202113627
(43) Date of publication of application: 29.03.2023
(73) Proprietor: Stratec SE, 75217 Birkenfeld (DE)
(72) Inventor: Habrich, Thilo, 75323 Bad Wildbad (DE)
(74) Representative: Tegethoff, Sebastian

(56) References cited:
- US-A- 5 777 221

## Description

### Field of the Invention

The invention relates to a method for adaptive signal processing.

### Brief description of the related art

Automated analyser systems for use in clinical diagnostics and life sciences are produced by a number of companies. For example, STRATEC^{®} SE, Birkenfeld, Germany, produces a number of devices for specimen handling and detection for use in automated analyser systems and other laboratory instrumentation.

STRATEC^{®} designs and manufactures automated analytical systems in the field of in vitro diagnostics (IVD), which use a number of individual instrument components to process diagnostic assays. One important component in such devices relates to the washing stations for rinsing the samples prior to their measurement. Light barriers have already been used for process control, i.e. for a qualitative analysis of individual aspirations by measuring the aspiration times. However, due to the static implementation of the system, there is insufficient differentiation between signal and background noise in the evaluation.

As already mentioned, IVD devices for processing diagnostic assays, comprise many individual device components, hereinafter also referred to as modules. These modules take over individual processing steps in the sequence of processing the samples. The functionality required for these processing steps is provided by the firmware of the modules. Generally, data is collected during the processing of samples and checked by means of a process control. Process control is used to analyze the collected parameters and to ensure a correct analysis procedure. If an erroneous behavior is detected during process control, the currently processed sample is discarded, if necessary.

A central task of processing samples in IVD devices is the movement of liquids, or the correct transport of consumables comprising a sample such as cuvettes during processing in the device. For both processes, an accurate assessment of the amount of liquid and the position of the consumables is crucial. These processes can be monitored using light barrier sensors. A light source shines through the medium to be measured for a defined time per measurement. To that end the light intensity is measured with a photodiode which is arranged usually opposite to the light source. The measured light signal is recorded as varying voltages which must now be analyzed to distinguish between the actual signal and the background noise.

Published U.S. patent US 5,777,221 discloses a failsafe apparatus for verifying a volume of aspirated reagent before it is provided to dilute a sample in an automated assay instrument. A pump draws reagent through a tube having a reagent probe disposed at one end. An optical flow detector includes an optical source disposed proximate the tube to illuminate the interior of the tube, and a photodetector oriented ninety degrees about the circumference of the tube from the source to detect reflected illumination from the contents of the tube. The photodetector provides one voltage level with gas/air within the tube, and a second level with a liquid within the tube. A circuit in communication with the detector discriminates between the two levels. The rate at which aspirate is pumped and the volume of the tube from a probe tip inlet to the detector are known constants. Therefore, a given volume of aspirate takes a predictable amount of time to pass from tip to detector. The actual time is determined by measuring the elapsed time between the start of the aspiration of a reagent, and a liquid-air transition detected at the end of the aspirated reagent. If the liquid-air transition is not seen at the expected time, one of several problems with the system are assumed, and the assay is cancelled. The disadvantage of the disclosed apparatus and method relates to the fact that no adaptive signal processing is provided.

Static process control known from the prior art like U.S. patent 5,777,221 for distinguishing between signal and background noise may lead to incorrect evaluations in certain cases. The reason for this is the static approach of signal processing. The known approach can only react in discrete steps to changes in the media arranged between the light source and the photodiode. This is done in the context of a regular recalibration of the system. The sensor system cannot react to changes of the media in the system between two calibrations. This circumstance can lead to errors in the evaluation.

Thus, there is a need to provide a device for adaptive signal processing when monitoring washing processes in automated analyser systems.

### Object of the Invention

It is therefore the object of this invention to provide a device and a method for adaptive signal processing when monitoring washing processes in automated analyser systems.

### Summary of the Invention

The present invention provides a method for adaptive signal processing, comprising the steps of illuminating the content in a container with a light source from one side of the container; measuring the optical signal with a sensor resulting from light shining through the container and its content; assigning voltage values to the measured optical signals; preparing a voltage curve from sampled measurements of voltage values over time; determining a voltage level of a background noise level; performing a first plausibility check to verify whether a target signal is already present at the beginning of the measurement by reducing the voltage values by a defined factor to a preset fallback level if the median of measured voltage values at the beginning of the voltage curve is outside a tolerance range with a value that is more than 50% higher than an expected target value of a system calibration, or proceeding with the median voltage values if the measured voltage at the beginning of the voltage curve is within the tolerance range or is lower than the expected value of the system calibration, determining the voltage level of a target signal by calculating the median of a group of the highest measured voltage values, performing a second plausibility check by determining whether the median of a group of highest target voltage values is at least 20% higher compared to the defined voltage values of the background noise level or the presetfallback level, only proceeding with the method if the median of the group of the highest voltage values differs at least by 20% from the defined voltage values of the background noise level or a preset fallback level by determining discrimination limits between the voltage values relating to a background noise level and a target level, respectively, by setting the discrimination limit in the middle between the noise level and signal level.

Another aspect of the present invention relates to the step of determining voltage values in a running process for process control.

In another embodiment of the method according to the present disclosure, it is envisaged that the median of voltage values from the beginning comprises the median value of pre-defined number of measured voltage values.

It is further intended that the median of the group of highest voltage values is defined from a pre-defined number of measured highest voltage values.

In a further aspect of the present invention, the method is stopped if the median of the measured voltage values in the first plausibility check is at least 50% higher.

The method may comprise in another embodiment the step of measuring optical signal in a sample with a known concentration of a target for obtaining a voltage value for an expected target signal.

The method may also comprise the step of measuring optical signal in a sample without a target for obtaining a voltage value for a noise level.

The method refers to the understanding of a container being bottle, vessel, cuvette, tube, hose or a channel.

Another object of the present disclosure relates to a method for process control of samples which are optically evaluated in a device comprising the steps of applying a method as described above.

Still other aspects, features, and advantages of the present invention are readily apparent from the following detailed description, simply by illustrating preferable embodiments and implementations. The present invention is also capable of other and different embodiments and its several details can be modified in various obvious respects. Accordingly, the drawings and descriptions are to be regarded as illustrative in nature, and not as restrictive. Additional objects and advantages of the invention will be set forth in part in the description which follows and in part will be obvious from the description, or may be learned by practice of the invention.

### Summary of the Figures

The invention will be described based on figures. It will be understood that the embodiments and aspects of the invention described in the figures are only examples and do not limit the protective scope of the claims in any way. The invention is defined by the claims. It will be understood that features of one aspect or embodiment of the invention can be combined with a feature of a different aspect or aspects of other embodiments of the invention, in which:
FIG. 1 shows a plausibility check on an exemplary voltage curve.
FIG. 2 shows example of a faulty voltage curve.
FIG. 3 shows an example voltage curve that has successfully completed all plausibility checks.

### Detailed Description of the Invention and the Figures

The technical problem is solved by the independent claims. The dependent claims cover further specific embodiments of the invention.

A container within the meaning of the present invention refers to any receptacle that is appropriate to comprise a fluid like a liquid, gas, or any other material that may flow under external force or shear stress. Thus, a container also refers to a hose, tube or a channel which may comprise a fluid or through which a fluid may flow. A container shall also be understood to be a well of a multi well plate or a bottle.

One object of the present invention relates to a system comprising a light source and a photosensor. Another object of the invention relates to a method for adaptive signal processing of each trace originating from the photosensor. The method comprises an automatic detection of the voltage level of the target signal and the background noise. Based on the determined voltages advantageous decision limits are calculated. Such decision limits can be used to detect, for example, the temporal length of the signal. Due to a dynamic calculation of the decision limits, these limits are optimal for each measured voltage curve. The system is also able to detect a measurement with only noise and mark it as incomplete.

The subject matter of the present disclosure is based on using methods for adaptive signal processing of voltage curves. For this purpose, the continuous voltage measurements collected by optical sensors built into the instrument are evaluated. A voltage curve within the meaning of the present disclosure is a sampled measurement of voltages from a photodiode over time, wherein the photodiode measures light intensities through a medium which is comprised in a container or consumable or flows through a hose, tube or channel.

During the monitored process, the voltage of the photodiode is recorded at a high frequency. The measured voltage levels differ depending on the kind of medium which is between light source and sensor at the respective time. For these systems, a calibration is usually performed to obtain a comparable voltage level (target value of the system calibration) for the background noise over time. The calibration is performed on all instruments according to the same scheme to allow comparability between the instruments.

In the voltage curve, the period with signal should now be distinguished from the period with background noise. For this purpose, the voltage level of the background noise, which is usually present at the beginning of each curve, is first determined for each individual voltage curve. For this purpose, for example, the first 40 values of the curve are analyzed, and the median of these values is calculated. Here, a plausibility check is performed to verify whether the target signal is already present at the beginning of the measurement. This case is assumed if the measured voltage at the beginning of the curve is more than 50% higher than the target value of the system calibration. In this case the voltage level is assessed to be too high, so that a preset fallback for the voltage level for the noise is assumed, to allow for the calculation to take place. The value of the fallback depends on the application.

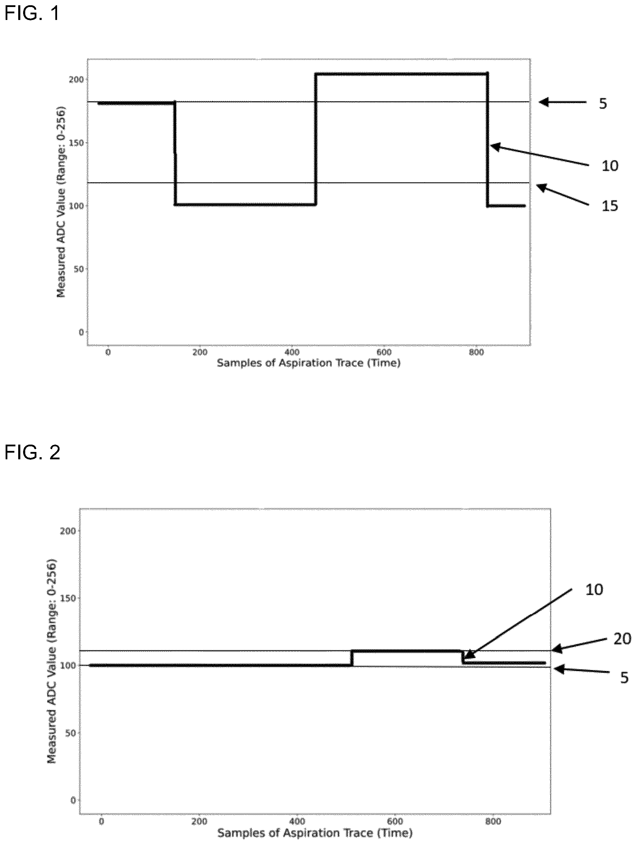

FIG. 1 illustrates such a case of plausibility check on an exemplary voltage curve. The algorithm has determined a noise level 5 of approximately 180 from the first 40 values of the voltage curve 10. The determined noise level is 80 % above the specified target value of 100 and thus outside the tolerance range of 50 %. In this case, the voltage value of the first 40 determined values is too high. As a result of the plausibility check, a preset fallback 15 with a fixed voltage level of e.g. 120 is assumed for the further evaluations.

The procedure of the first plausibility check depends on the target application. In critical applications, a preset fallback is not permitted. With these voltage curves, if the voltage level of the background noise is increased, the voltage curve is generally marked as faulty.

After the plausibility check, the voltage level of the target signal is determined. This is done, for example, by sorting the 5 highest values of the trace and calculating the median of these values. This is done to compensate for individual error measurements of the voltage. In the next plausibility check, it is checked whether a sufficiently large voltage difference can be detected in the curve at all. Depending on the application, the calculated levels should differ at least by 20-30%. If the voltage difference is too low, the curve is marked as faulty during the second plausibility check.

An example of a faulty voltage curve is shown in FIG. 2. For this voltage curve 10, the determined noise level 5 is within the specifications from the first plausibility check. In this example, the determined noise level 5 is 100. After determining the five highest values from the voltage curve 10, the calculation of the median results in a value of 110 for the signal level 20. The voltage difference of the calculated levels is thus 10% and is below the specified minimum difference. Consequently, the discrimination of the calculated levels is too small for the further evaluations. The second plausibility check marks the curve shown in FIG. 2 as faulty.

When all plausibility checks are completed, optimal discrimination limits between the voltage of the noise and the signal are determined. For this purpose, the discrimination limit is set exactly in the middle between the two calculated levels. The resulting calculated boundary now allows a distinction between noise level and signal level. This boundary is used to determine the length of the target signal above the boundary. The result can then be used for further process controls.

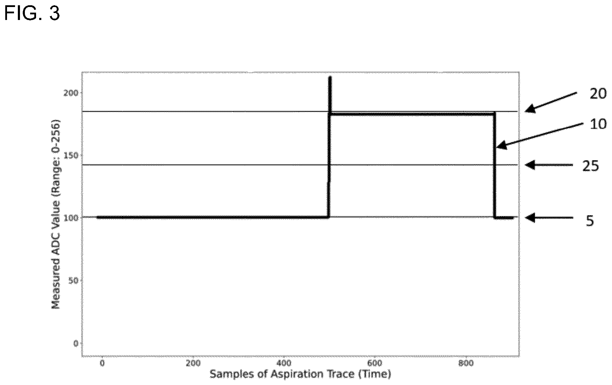

FIG. 3 shows an example voltage curve 10 that has successfully completed all plausibility checks. From the analysis of the first 40 values of the voltage curve 10, the algorithm determined a noise level 5 of 100. For the first plausibility check, the determined noise level 5 is within the tolerance range of the target value of the system calibration. Now, in the second plausibility check, the voltage difference of the calculated levels is determined. By calculating the median of the five highest values from the voltage curve 10, a signal level 20 of 180 was determined. There is thus a sufficiently large voltage difference of 80% between the noise level 5 and the signal level 20, so that the calculated limit 25 of 140 is obtained in the middle of the two levels 5, 20. Signals below the limit 25 of 140 are thus noise level 5 and values above the limit 25 of 140 are target signals. This distinction can now be used for process controls.

The advantages of a method according to the present invention compared to static signal processing known from the state of the art relate to adaptive signal processing. As described, static signal processing cannot adapt to changes in the measurement system without recalibration. In contrast, adaptive signal processing can adapt to both spontaneous and gradual changes in the measurement system. Therefore, the evaluation is always best possible despite variations in the measurement system. Furthermore, adaptive signal processing allows the implementation of plausibility checks. It can be checked whether the measurement contains a signal at all or whether the signal occurs at the wrong time during the measurement.

Various alternative approaches for adaptive signal processing are conceivable. One possibility is to recalibrate the measurement system very regularly when using static signal processing. However, such frequent recalibration is not practical since this takes some time and therefore cannot be performed regularly during the day without slowing down the processing.

Another alternative is to manually inspect the measurement system on a regular basis to detect any deviations and correct them if necessary. This would also be a very time-consuming procedure, which would require trained personnel.

The foregoing description of the preferred embodiment of the invention has been presented for purposes of illustration and description. It is not intended to be exhaustive or to limit the invention to the precise form disclosed, and modifications and variations are possible considering the above teachings or may be acquired from practice of the invention. The embodiment was chosen and described to explain the principles of the invention and its practical application to enable one skilled in the art to utilize the invention in various embodiments as are suited to the particular use contemplated. It is intended that the scope of the invention be defined by the claims appended hereto.

### Reference Numerals

- 5: noise level
- 10: voltage curve
- 15: fallback
- 20: signal level
- 25: limit

## Claims

1. A method for adaptive signal processing, comprising the steps of
- illuminating the content in a container with a light source from one side of the container;
- measuring the optical signal with a sensor resulting from light shining through the container and its content;
- assigning voltage values to the measured optical signals;
- preparing a voltage curve from sampled measurements of voltage values over time;
- determining a voltage level of a background noise level;
- performing a first plausibility check to verify whether a target signal is already present at the beginning of the measurement; by
a. reducing the voltage values by a defined factor to a preset fallback level if the median of measured voltage values at the beginning of the voltage curve is outside a tolerance range with a value that is more than 50% higher than an expected target value of a system calibration; or
b. proceeding with the median voltage values if the measured voltage at the beginning of the voltage curve is within the tolerance range or is lower than the expected target value of the system calibration;
- determining the voltage level of a target signal by calculating the median of a group of the highest measured voltage values ;
i. performing a second plausibility check by determining whether the median of a group of highest target voltage values is at least 20% higher compared to the defined voltage values of the background noise level or the preset fallback level;
- only proceeding with the method if the median of the group of the highest voltage values differs at least by 20% from the defined voltage values of the background noise level or a preset fallback level by determining discrimination limits between the voltage values relating to a background noise level and a target level, respectively, by setting the discrimination limit in the middle between the background noise level and signal level.

2. The method of claim 1, comprising the step of determining voltage values in a running process for process control.

3. The method of claim 1 or 2, wherein the median of voltage values from the beginning comprises the median value of pre-defined number of measured voltage values.

4. The device of any one of claims 1 to 3, wherein the median of the group of highest voltage values is defined from a pre-defined number of measured highest voltage values.

5. The method of any one of claims 1 to 4, wherein the method is stopped if the median of the measured voltage values in the first plausibility check is at least 50% higher than an expected target value of a system calibration.

6. The method of any one of claims 1 to 5, comprising the step of measuring optical signal in a sample with a known concentration of a target for obtaining a voltage value for an expected target signal.

7. The method of any one of claims 1 to 6, comprising the step of measuring optical signal in a sample without a target for obtaining a voltage value for a noise level.

8. The method of any one of claims 1 to 7, wherein a container is bottle, vessel, cuvette, tube, hose or a channel.

9. A method for process control of samples which are optically evaluated in a device comprising the steps of applying a method according to claim 1.

## Patentansprüche

1. Ein Verfahren zur adaptiven Signalverarbeitung, das die folgenden Schritte umfasst
- Beleuchten des Inhalts in einem Behälter mit einer Lichtquelle von einer Seite des Behälters aus;
- Messung des optischen Signals mit einem Sensor, das sich aus dem Licht ergibt, das durch den Behälter und seinen Inhalt scheint;
- Zuordnung von Spannungswerten zu den gemessenen optischen Signalen;
- Erstellung einer Spannungskurve aus abgetasteten Messungen von Spannungswerten im Zeitverlauf;
- Bestimmung eines Spannungspegels eines Hintergrundgeräuschpegels;
- Durchführung einer ersten Plausibilitätsprüfung, um festzustellen, ob ein Zielsignal bereits zu Beginn der Messung vorhanden ist; durch
a. Reduzieren der Spannungswerte um einen definierten Faktor auf ein vorgegebenes Rückfallniveau, wenn der Median der gemessenen Spannungswerte am Anfang des Spannungsverlaufs außerhalb eines Toleranzbereichs liegt, mit einem Wert, der mehr als 50% über einem erwarteten Zielwert einer Systemkalibrierung liegt; oder
b. mit den mittleren Spannungswerten fortzufahren, wenn die gemessene Spannung am Anfang der Spannungskurve innerhalb des Toleranzbereichs liegt oder niedriger als der erwartete Zielwert der Systemkalibrierung ist;
- Bestimmung des Spannungspegels eines Zielsignals durch Berechnung des Medians einer Gruppe der höchsten gemessenen Spannungswerte;
i. Durchführung einer zweiten Plausibilitätsprüfung, indem festgestellt wird, ob der Median einer Gruppe von höchsten Zielspannungswerten mindestens 20 % höher ist als die definierten Spannungswerte des Hintergrundgeräuschpegels oder des voreingestellten Rückfallpegels;
- nur dann mit dem Verfahren fortzufahren, wenn der Median der Gruppe der höchsten Spannungswerte um mindestens 20 % von den definierten Spannungswerten des Hintergrundgeräuschpegels oder eines voreingestellten Rückfallpegels abweicht, indem Unterscheidungsgrenzen zwischen den Spannungswerten, die sich auf einen Hintergrundgeräuschpegel bzw. einen Zielpegel beziehen, bestimmt werden, indem die Unterscheidungsgrenze in der Mitte zwischen dem Hintergrundgeräuschpegel und dem Signalpegel festgelegt wird.

2. Das Verfahren nach Anspruch 1, umfassend den Schritt der Bestimmung von Spannungswerten in einem laufenden Prozess zur Prozesssteuerung.

3. Das Verfahren nach Anspruch 1 oder 2, wobei der Median der Spannungswerte von Anfang an den Medianwert einer vordefinierten Anzahl von gemessenen Spannungswerten umfasst.

4. Das Verfahren nach einem der Ansprüche 1 bis 3, wobei der Median der Gruppe der höchsten Spannungswerte aus einer vordefinierten Anzahl von gemessenen höchsten Spannungswerten bestimmt wird.

5. Das Verfahren nach einem der Ansprüche 1 bis 4, wobei das Verfahren gestoppt wird, wenn der Median der gemessenen Spannungswerte in der ersten Plausibilitätsprüfung um mindestens 50 % höher ist als ein erwarteter Zielwert einer Systemkalibrierung.

6. Das Verfahren nach einem der Ansprüche 1 bis 5, umfassend den Schritt des Messens des optischen Signals in einer Probe mit einer bekannten Konzentration eines Targets, um einen Spannungswert für ein erwartetes Targetsignal zu erhalten.

7. Das Verfahren nach einem der Ansprüche 1 bis 6, umfassend den Schritt der Messung des optischen Signals in einer Probe ohne Ziel, um einen Spannungswert für einen Rauschpegel zu erhalten.

8. Das Verfahren nach einem der Ansprüche 1 bis 7, wobei ein Behälter eine Flasche, ein Gefäß, eine Küvette, ein Rohr, ein Schlauch oder ein Kanal ist.

9. Ein Verfahren zur Prozesskontrolle von Proben, die in einer Vorrichtung optisch ausgewertet werden, umfassend die Schritte der Anwendung eines Verfahrens nach Anspruch 1.

## Revendications

1. Une méthode de traitement adaptatif des signaux, comprenant les étapes suivantes
- éclairer le contenu d'un récipient à l'aide d'une source lumineuse à partir d'un côté du récipient ;
- mesurer le signal optique à l'aide d'un capteur résultant de la lumière qui traverse le conteneur et son contenu ;
- l'attribution de valeurs de tension aux signaux optiques mesurés ;
- préparer une courbe de tension à partir de mesures échantillonnées de valeurs de tension dans le temps ;
- déterminer le niveau de tension d'un niveau de bruit de fond ;
- effectuer un premier contrôle de plausibilité pour vérifier si un signal cible est déjà présent au début de la mesure ; en
a. réduisant les valeurs de tension d'un facteur défini jusqu'à un niveau de repli prédéfini si la médiane des valeurs de tension mesurées au début de la courbe de tension se situe en dehors d'une plage de tolérance avec une valeur supérieure de plus de 50 % à une valeur cible attendue d'un étalonnage du système ; ou
b. poursuivant avec les valeurs de tension médianes si la tension mesurée au début de la courbe de tension se situe dans la plage de tolérance ou est inférieure à la valeur cible attendue de l'étalonnage du système ;
- déterminer le niveau de tension d'un signal cible en calculant la médiane d'un groupe de valeurs de tension mesurées les plus élevées ;
i. effectuer un deuxième contrôle de plausibilité en déterminant si la médiane d'un groupe de valeurs de tension cibles les plus élevées est supérieure d'au moins 20 % aux valeurs de tension définies pour le niveau de bruit de fond ou le niveau de repli prédéfini ;
- ne poursuivre la méthode que si la médiane du groupe des valeurs de tension les plus élevées diffère d'au moins 20 % des valeurs de tension définies pour le niveau de bruit de fond ou un niveau de repli prédéfini, en déterminant des limites de discrimination entre les valeurs de tension relatives à un niveau de bruit de fond et à un niveau cible, respectivement, en fixant la limite de discrimination au milieu entre le niveau de bruit de fond et le niveau du signal.

2. La méthode de la revendication 1, comprenant l'étape de détermination des valeurs de tension dans un processus en cours pour le contrôle du processus.

3. La méthode de la revendication 1 ou 2, dans laquelle la médiane des valeurs de tension depuis le début comprend la valeur médiane d'un nombre prédéfini de valeurs de tension mesurées.

4. La méthode de l'une des revendications 1 à 3, dans laquelle la médiane du groupe de valeurs de tension les plus élevées est définie à partir d'un nombre prédéfini de valeurs de tension les plus élevées mesurées.

5. La méthode de l'une des revendications 1 à 4, dans laquelle la méthode est arrêtée si la médiane des valeurs de tension mesurées lors du premier contrôle de plausibilité est supérieure d'au moins 50 % à une valeur cible attendue d'un étalonnage du système.

6. La méthode de l'une des revendications 1 à 5, comprenant l'étape de mesure du signal optique dans un échantillon avec une concentration connue d'une cible pour obtenir une valeur de tension pour un signal cible attendu.

7. La méthode de l'une des revendications 1 à 6, comprenant l'étape de mesure du signal optique dans un échantillon sans cible pour obtenir une valeur de tension pour un niveau de bruit.

8. La méthode de l'une des revendications 1 à 7, dans laquelle le contenant est une bouteille, un récipient, une cuvette, un tube, un tuyau ou un canal.

9. Une méthode de contrôle du processus d'échantillons évalués optiquement dans un appareil, comprenant les étapes d'application d'une méthode selon la revendication 1.
